# EUROPÄISCHE PATENTSCHRIFT

(11) **EP 1 203 375 B1**
(45) Veröffentlichungstag und Bekanntmachung des Hinweises auf die Patenterteilung: **17.03.2004**
(21) Anmeldenummer: 00958157.0
(22) Anmeldetag: 14.07.2000
(51) Int. Cl.: G11B 19/28, G11B 7/00, G11B 20/10

(54) **VERFAHREN ZUR EINSTELLUNG DER DREHZAHL EINER SPEICHERPLATTE**
METHOD FOR REGULATING THE ROTATIONAL SPEED OF A STORAGE DISK
PROCEDE POUR REGLER LA VITESSE DE ROTATION D'UN DISQUE MEMOIRE

(30) Priorität: 16.07.1999 DE 19933419
(43) Veröffentlichungstag der Anmeldung: 08.05.2002
(73) Patentinhaber: ROBERT BOSCH GMBH, 70442 Stuttgart (DE)
(72) Erfinder: POTRYKUS, Sven, D-31162 Bad Salzdetfurth (DE); UCHTMANN, Dietmar, D-31139 Hildesheim (DE)
(86) Internationale Anmeldenummer: PCT/DE2000/002339
(87) Internationale Veröffentlichungsnummer: WO 2001/006508

(56) Entgegenhaltungen:
- US-A- 5 425 014
- PATENT ABSTRACTS OF JAPAN vol. 1997, no. 01, 31. Januar 1997 (1997-01-31) & JP 08 235770 A (HITACHI LTD), 13. September 1996 (1996-09-13)
- PATENT ABSTRACTS OF JAPAN vol. 1999, no. 09, 30. Juli 1999 (1999-07-30) & JP 11 110901 A (NEC HOME ELECTRON LTD), 23. April 1999 (1999-04-23)
- PATENT ABSTRACTS OF JAPAN vol. 1995, no. 06, 31. Juli 1995 (1995-07-31) & JP 07 073590 A (VICTOR CO OF JAPAN LTD), 17. März 1995 (1995-03-17)
- PATENT ABSTRACTS OF JAPAN vol. 018, no. 264 (P-1740), 19. Mai 1994 (1994-05-19) & JP 06 036289 A (MATSUSHITA ELECTRIC IND CO LTD), 10. Februar 1994 (1994-02-10)

## Beschreibung

### Stand der Technik

Die Erfindung geht von einem Verfahren zur Einstellung einer Drehzahl nach der Gattung des Hauptanspruchs aus.

Es sind bereits als Kompaktdisk-Spieler ausgebildete Abspielgeräte bekannt, bei denen digitale Audiodaten mittels einer Lesevorrichtung aus Datenspuren einer Kompaktdisk ausgelesen werden. Die Datenspuren sind dabei konzentrisch zu einer Rotationsachse der Kompaktdisk angeordnet und stellen zur Vereinfachung der nachfolgenden Beschreibung eine Näherung für eine einzige auf der Kompaktdisk angeordnete spiralförmige Datenspur da. Zum Auslesen der in den Datenspuren gespeicherten digitalen Audiodaten wird die Kompaktdisk über einen Drehteller in Rotation versetzt und die Lesevorrichtung radial bezüglich der Rotationsachse über die Kompaktdisk zum Auslesen der digitalen Audiodaten bewegt.

Solchermaßen ausgebildete Laufwerke von Kompaktdisk-Spielern werden üblicherweise in einem Betriebsmodus mit konstanter linearer Geschwindigkeit betrieben. Abhängig von der Position der Lesevorrichtung auf der Kompaktdisk wird die Drehzahl dabei so geregelt, daß ein kontinuierlicher Datenstrom mit konstanter Datenmenge pro Zeit, also mit konstant linearer Geschwindigkeit, ausgelesen wird. Die konstant lineare Geschwindigkeit ist dabei insbesondere durch die Nachführung der Lesevorrichtung über die Datenspuren der Kompaktdisk und durch die Verarbeitungskapazität des Abspielgerätes zur Auswertung der aus den Datenspuren der Kompaktdisk ausgelesenen digitalen Audiodaten begrenzt.

Bei Spursprüngen im Betriebsmodus mit konstant linearer Geschwindigkeit ist eine Anpassung der Drehzahl in Abhängigkeit von der Position der Lesevorrichtung erforderlich, um ein Auslesen der digitalen Audiodaten aus den Datenspuren der Kompaktdisk bei konstanter Datenmenge pro Zeiteinheit einzuhalten. Durch die für die Anpassung der Drehzahl benötigte Zeit verringert sich jedoch die Zugriffsgeschwindigkeit auf die Daten bei Spursprüngen.

Das Dokument "Patent Abstracts of Japan Vol. 1999, No. 09, 30.07.1999 zeigt ein Verfahren zum Auslesen einer Speicherplatte, auf der Informationen mit konstanter linearer Dichte aufgezeichnet sind, und bei dem die Datenmenge der äußersten Spur ermittelt wird. Auf dieser Grundlage wird dann eine konstante Rotationsgeschwindigkeit festgelegt, so dass die Daten dort mit der maximal verarbeitbaren Datentransferrate gelesen werden. Die weiter innen liegenden Spuren werden ebenfalls mit dieser konstanten Winkelgeschwindigkeit mit entsprechend niedrigerer Datenrate gelesen. Auch die Dokumente "Patent Abstracts of Japan, Vol. 1997, No. 01,31.01.1977, US-A 5425014, Patent Abstracts of Japan Vol. 1995, No. 06, 31.07.1995 und Patent Abstracts of Japan, Vol, 018, No. 264, 19.05.1994" betreffen das Auslesen von Daten einer Speicherplatte mit konstanter Rotationsgeschwindigkeit. In den Entgegenhaltungen wird die in der äußersten Spur gespeicherten Datenmenge berechnet, so dass nicht in allen Fällen eine zufriedenstellende Genauigkeit erreicht werden kann.

### Vorteile der Erfindung

Das erfindungsgemäße Verfahren mit den Merkmalen des Hauptanspruchs hat gegenüber dem Betriebsmodus mit Konstant linearer Geschwindigkeit den Vorteil, daß die Drehzahl beim Abspielen des plattenförmigen Speichermediums konstant gehalten wird. Auf diese Weise wird das Abspielgerät in einem Betriebsmodus mit konstanter Winkelgeschwindigkeit betrieben. Bei Spursprüngen im Betriebsmodus mit konstanter Winkelgeschwindigkeit ist eine Anpassung der Drehzahl zur Steuerung der pro Zeiteinheit ausgelesenen Datenmenge nicht erforderlich, so daß eine höhere Zugriffsgeschwindigkeit auf die Daten in den Datenspuren bei Spursprüngen erzielt werden kann.

Ein weiterer Vorteil besteht darin, daß eine äußerste, von der Rotationsachse abgewandte und mit Nutzdaten beschriebene Datenspur des plattenförmigen Spreichermediums ermittelt wird, daß ein Wert für die in der äußersten Datenspur gespeicherte Datenmenge durch Messung ermittelt wird, daß die Drehzahl in Abhängigkeit der ermittelten Datenmenge und einer Datentransferrate eingestellt wird, wobei die Datentransferrate eine maximale Datenmenge angibt, die pro Zeiteinheit vom Abspielgerät auslesbar ist, so daß die in der äußersten Datenspur abgespeicherten Nutzdaten mit der Datentransferrate beim Abspielen des plattenförmigen Speichermediums auslesbar sind. Auf diese Weise kann die Drehzahl des jeweiligen plattenförmigen Speichermediums in Abhängigkeit der auf dem Speichermedium abgelegten Datenstruktur beziehungsweise der Anordnung der Datenspuren mit Nutzdaten auf dem Speichermedium eingestellt werden. Somit kann die Drehzahl für jedes Speichermedium so eingestellt werden, daß in Abhängigkeit der auf dem jeweiligen Speichermedium abgelegten Datenstruktur die für dieses Speichermedium maximal mögliche auslesbare Datenmenge pro Zeiteinheit ausnutzbar ist.

Eine besonders einfache Ermittlung der äußersten Datenspur erfolgt dabei durch Auswertung von Inhaltsdaten in einem Einlaufbereich des plattenförmigen Speichermediums.

Eine besonders genaue Ermittlung des Wertes für die in der äußersten Datenspur gespeicherte Datenmenge ergibt sich durch Spursprung der Lesevorrichtung des Abspielgerätes auf diese Datenspur, durch Auslesen der Nutzdaten aus dieser Datenspur und durch Messen der Anzahl der ausgelesenen Nutzdaten dieser Datenspur beziehungsweise durch Messen der Zeit für diesen Auslesevorgang bei einer vorgegebenen konstant linearen Datenlesegeschwindigkeit.

### Zeichnung

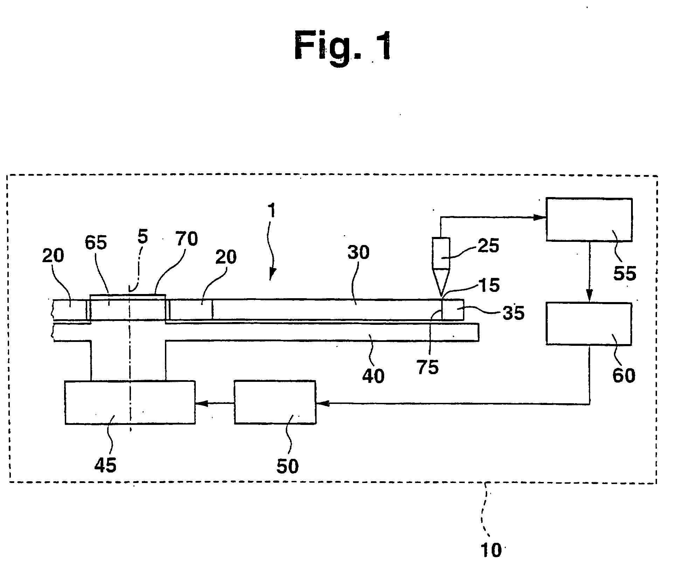

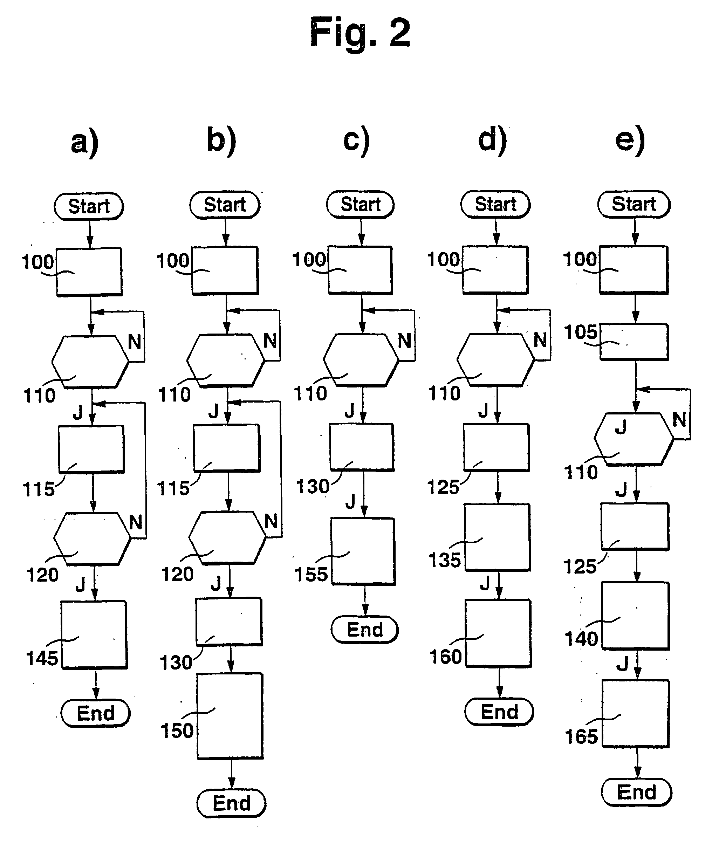

Ausführungsbeispiele der Erfindung sind in der Zeichnung dargestellt und in der nachfolgenden Beschreibung näher erläutert. Es zeigen Figur 1 ein Blockschaltbild eines Abspielgerätes und Figur 2 Ablaufpläne für fünf verschiedene Ausbildungen zur Einstellung einer Drehzahl, wobei in den Figuren 2d und 2e Ausführungen des erfindungsgemäßen Verfahrens dargestellt sind.

In Figur 1 kennzeichnet 10 ein Abspielgerät zum Abspielen eines plattenförmigen Speichermediums 1. Bei dem plattenförmigen Speichermedium 1 kann es sich dabei beispielsweise um eine magnetische, eine optische oder eine magneto-optische Speicherplatte handeln. Bei Ausbildung des Speichermediums 1 als optische Speicherplatte kann es sich beispielsweise um eine Kompaktdisk, eine CD-ROM, eine Digital Video Disc (DVD), eine Minidisk oder dergleichen handeln. Das Abspielgerät 10 ist dann entsprechend beispielsweise als Laufwerk für magnetische, optische oder magneto-optische Speicherplatten ausgebildet. Bei Ausbildung des Abspielgerätes 10 als Laufwerk für optische Speicherplatten kann es sich beispielsweise um einen Kompaktdisk-Spieler, ein CD-ROM-Laufwerk, ein Laufwerk für Digital Video Disks, ein Laufwerk für Minidisks oder dergleichen handeln.

Das Speichermedium 1 ist dabei kreisplattenförmig ausgebildet und liegt konzentrisch zu einer Rotationsachse 5 auf einem Drehteller 40 auf, der von einem Motor 45 antreibbar ist, so daß das Speichermedium 1 in eine Drehbewegung um die Rotationsachse 5 versetzt werden kann. Die Speicherplatte 1 ist in Figur 1 querschnittsförmig dargestellt und bezüglich der Rotationsachse 5 dargestellt und bezüglich der Rotationsachse 5 rotationssymetrisch aufgebaut. Zur Zentrierung des Speichermediums 1 auf dem Drehteller 40 umfaßt das Speichermedium 1 ein zentrisches Plattenloch 65 zur Aufnahme eines Zapfens 70 des Drehtellers 40. An das zentrische Plattenloch 65 schließt sich ein Einlaufbereich 20 des Speichermediums 1 an, in dem Inhalts- und/oder Adressdaten von auf dem Speichermedium 1 gespeicherten Nutzdaten gespeichert sind. Bei Ausbildung des Speichermediums 1 als Kompaktdisk können im Einlaufbereich 20 eine Gesamtwiedergabezeit, eine Anzahl von Musiktiteln, Wiedergabedauern der Musiktitel und Anfangsadressen der Musiktitel abgespeichert sein. An den Einlaufbereich 20 des Speichermediums 1 schließt sich ein Programmbereich 30 an, in dem Nutzdaten in einer konzentrisch zur Rotationsachse 5 spiralförmig verlaufenden Datenspur abgelegt sind. Die spiralförmig verlaufende Datenspur kann vereinfachend und näherungsweise in eine Vielzahl von zur Rotationsachse 5 konzentrischen Datenspuren zerlegt betrachtet werden. Im Falle der Ausbildung des Speichermediums 1 als Kompaktdisk können die Nutzdaten als digitale Audiodaten ausgebildet sein. Im Falle der Ausbildung des Speichermediums 1 als Digital Video Disc können die Nutzdaten digital ausgebildet sein. Im Falle der Ausbildung des Speichermediums 1 als CD-ROM können die Nutzdaten als Programmdaten ausgebildet sein. An den Programmbereich 30 schließt sich ein Auslaufbereich . 35 an, in dem in der Regel keine Nutzdaten gespeichert sind. Auch die Inhalts- und/oder Adressdaten im Einlaufbereich 20 sind in der einen spiralförmigen Datenspur des Speichermediums 1 abgelegt. Daher kann diese Datenspur auch im Einlaufbereich 20 in mehrere konzentrisch zur Rotationsachse 5 angeordnete Datenspuren zerlegt betrachtet werden. Eine Lesevorrichtung 25 wird zum Auslesen der Daten aus dem Speichermedium 1 radial über den Einlaufbereich 20 und den Programmbereich 30 von der Rotationsachse 5 wegbewegt. Die Lesevorrichtung 25 liest dabei die Daten aus dem Speichermedium 1 aus und führt sie einem Dekoder 55 zu. Je nach Art des Abspielgerätes 10 werden dabei die Daten von der Lesevorrichtung 25 optisch oder magnetisch vom Speichermedium 1 ausgelesen. Im Dekoder 55 werden die ausgelesenen Daten dekodiert und anschließend einer Auswerteeinheit 60 zugeführt. Die Auswerteeinheit 60 steuert eine Motorsteuerung 50, die wiederum den Motor 45 ansteuert. In Figur 1 sind nur die für die Realisierung des erfindungsgemäßen Verfahrens wesentlichen Elemente des Abspielgerätes 10 dargestellt.

In einem Abspielbetriebsmodus soll nun das Speichermedium 1 zum Auslesen der Nutzdaten im Programmbereich 30 mittels der Lesevorrichtung 25 mit einer konstanten Drehzahl rotatorisch um die Rotationsachse 5 bewegt werden. Unter der Voraussetzung, daß die Nutzdaten bei einer konstant linearen Aufnahmegeschwindigkeit von beispielsweise 1,2 m/s im Programmbereich 30 abgespeichert wurden, ist dann im Abspielbetriebsmodus die pro Zeiteinheit aus den Datenspuren ausgelesene Datenmenge an einem von der Rotationsachse 5 abgewandten Außenrand 75 des Programmbereichs 30 größer als beim Auslesen von Daten aus Datenspuren des Programmbereichs 30, die der Rotationsachse 5 näher liegen. Die Drehzahl des Speichermediums 1 ist somit durch die maximal zulässige auslesbare Datenmenge pro Zeiteinheit am Außenrand 75 des Programmbereichs 30 begrenzt. Diese maximale, pro Zeiteinheit vom Abspielgerät 10 auslesbare Datenmenge wird im folgenden als Datentransferrate bezeichnet. Die Datentransferrate ist dabei insbesondere durch die Nachführbarkeit der Lesevorrichtung 25 über die Datenspuren des Speichermediums 1 in mechanischer Hinsicht und durch die Geschwindigkeit für die Auswertung der Daten in der Auswerteeinheit 60 in informationstechnischer Hinsicht begrenzt. Die konstante Drehzahl des Speichermediums 1 im Abspielbetriebsmodus wird dann so gewählt, daß die in einer äußersten, von der Rotationsachse 5 abgewandten Datenspur 15 des Programmbereichs 30 des Speichermediums 1 abgespeicherten Nutzdaten mit der Datentransferrate beim Abspielen des Speichermediums 1 auslesbar sind. Beim Auslesen von Datenspuren, die näher an der Rotationsachse 5 als die äußerste Datenspur 15 liegen, wird somit die Datentransferrate nicht voll ausgenutzt.

Um die Datentransferrate beim Abspielen des Speichermediums 1 zumindest für die äußerste Datenspur 15 erreichen zu können, muß zuvor die äußerste Datenspur 15 und die in ihr gespeicherte Datenmenge in der Auswerteeinheit 60 ermittelt werden. Die Drehzahl kann dann von der Motorsteuerung 50 in Abhängigkeit der ermittelten Datenmenge in der äußersten Datenspur 15 und der Datentransferrate eingestellt werden. Gemäß Figur 1 ist die äußerste Datenspur 15 an der Grenze zwischen dem Programmbereich 30 und dem Auslaufbereich 35, d.h. am Außenrand 75 angeordnet. Die äußerste Datenspur 15 kann jedoch auch näher an der Rotationsachse 5 im Programmbereich 30 liegen. In jedem Fall handelt es sich bei der äußersten Datenspur 15 um die äußerste, von der Rotationsachse 5 abgewandte und mit Nutzdaten beschriebene Datenspur im Programmbereich 30 des Speichermediums 1 und damit um die äußerste, von der Rotationsachse 5 abgewandte und mit Nutzdaten beschriebene Datenspur des Speichermediums 1 selbst.

Die äußerste Datenspur 15 kann dabei durch Auswertung der aus dem Einlaufbereich 20 ausgelesenen Inhalts- und/oder Adreßdaten ermittelt werden. Bei einer vorgegebenen konstant linearen Aufnahmegeschwindigkeit für die Abspeicherung von Nutzdaten auf dem Speichermedium 1 von beispielsweise 1,2 m/s und einem vorgegebenen Abstand zwischen benachbarten Datenspuren von beispielsweise 1,6 µm läßt sich aus der im Einlaufbereich 20 gegebenenfalls gespeicherten Gesamtwiedergabezeit des Speichermediums 1 oder deren Berechnung mittels der Inhalts- und/oder Adreßdaten aus dem Einlaufbereich 20 der Abstand der äußersten Datenspur 15 von der Rotationsachse 5 ermitteln. Mittels der vorgegebenen konstant linearen Aufnahmegeschwindigkeit läßt sich dann auch die in der äußersten Datenspur 15 gespeicherte Datenmenge ermitteln. Dividiert man diese Datenmenge durch die Datentransferrate und bildet anschließend den Kehrwert, so erhält man die gewünschte konstante Drehzahl für den Abspielbetriebsmodus.

Für eine genauere Ermittlung der in der äußersten Datenspur 15 gespeicherten Datenmenge kann die konstant lineare Aufnahmegeschwindigkeit auch gemessen werden. Die konstant lineare Aufnahmegeschwindigkeit gibt dabei die zur Abspeicherung von Nutzdaten für die Wiedergabe in einer Sekunde Abspielzeit erforderliche Datenspurlänge an. Sie kann dadurch ermittelt werden, daß die Lesevorrichtung 25 genau eine vorgegebene Datenspur mit einem bekannten Radius bezüglich der Rotationsachse 5 ausliest und die Auswerteeinheit 60 ermittelt, wie lang die Wiedergabezeit zum Abspielen der aus der vorgegebenen Datenspur ausgelesenen Nutzdaten ist. Durch Division des durch den bekannten Radius berechenbaren Umfangs der vorgegebenen Datenspur durch die in der Auswerteeinheit 60 ermittelte Wiedergabezeit für die aus der vorgegebenen Datenspur ausgelesenen Daten erhält man die konstant lineare Aufnahmegeschwindigkeit.

Die in der äußersten Datenspur 15 gespeicherte Datenmenge kann noch genauer dadurch ermittelt werden, daß die Lesevorrichtung 25 einen Spursprung auf diese äußerste Datenspur 15 durchführt und die dort gespeicherten Nutzdaten ausliest. Die Auswerteeinheit 60 kann dann die Datenmenge der ausgelassenen Nutzdaten ermitteln. Durch Division der ermittelten Datenmenge durch die Datentransferrate und anschließende Kehrwertbildung wird dann, wie beschrieben, die gewünschte Drehzahl zum Abspielen des Speichermediums 1 im Abspielbetriebsmodus ermittelt.

Die Datenmenge der äußersten Datenspur 15 kann auch dadurch ermittelt werden, daß die Lesevorrichtung 25 einen Spursprung zur äußersten Datenspur 15 durchführt und diese mit einer vorgegebenen konstant linearen Datenlesegeschwindigkeit ausliest. In der Auswerteeinheit 60 wird dann die zum Auslesen der Nutzdaten aus der äußersten Datenspur 15 erforderliche Zeit ermittelt. Die Datenmenge der Nutzdaten in der äußersten Datenspur 15 wird dann aus der durch Multiplikation der vorgegebenen konstant linearen Datenlesegeschwindigkeit mit der in der Auswerteeinheit 60 ermittelten Zeit berechneten Datenspurlänge bestimmt, wobei vorausgesetzt ist, daß die pro Datenspurlängeneinheit gespeicherte Datenmenge vorgegeben und bekannt ist. Aus der berechneten Datenmenge und der Datentransferrate wird dann in der beschriebenen Weise wieder die gewünschte Drehzahl für den Abspielbetriebsmodus berechnet.

Gemäß Figur 2 werden Ablaufpläne für fünf verschiedene Möglichkeiten zur Ermittlung der konstanten Drehzahl für den Abspielbetriebsmodus dargestellt. Gleiche Bezugszeichen kennzeichnen dabei gleiche Programmpunkte.

Eine erste Realisierungmöglichkeit zeigt Figur 2 (a). Bei einem ersten Programmpunkt 100 veranlaßt die Motorsteuerung 50 den Motor 45 zum Antrieb des Drehtellers 40 bei einer ersten voreingestellten konstanten Drehzahl. Anschließend wird zu einem zweiten Programmpunkt 110 verzweigt. Beim zweiten Programmpunkt 110 prüft die Auswerteeinheit 60, ob ein Speichermedium 1 in das Abspielgerät 10 eingelegt wurde.

Ist dies der Fall, so wird zu einem dritten Programmpunkt 115 verzweigt, anderenfalls wird zum zweiten Programmpukt 110 zurückverzweigt. Beim dritten Programmpunkt 115 werden die Inhalts- und/oder die Adreßdaten aus dem Einlaufbereich 20 durch die Lesevorrichtung 25 ausgelesen. Anschließend wird zu einem vierten Programmpunkt 120 verzweigt. Beim vierten Programmpunkt 120 prüft die Auswerteeinheit 60, ob das Auslesen von Daten aus dem Einlaufbereich 20 abgeschlossen ist. Ist dies der Fall, so wird zu einem fünften Programmpunkt 145 verzweigt, andernfalls wird zum dritten Programmpunkt 115 zurückverzweigt. Beim fünften Programmpunkt 145 wird unter Annahme einer vorgegebenen konstant linearen Aufnahmegeschwindigkeit von beispielsweise 1,2 m/s und einem vorgegebenen Abstand zwischen benachbarten Datenspuren von beispielsweise 1,6 µm in der beschriebenen Weise unter Berücksichtigung der Datentransferrate eine zweite konstante Drehzahl für den Abspielbetriebsmodus von der Motorsteuerung 50 am Motor 45 zum Antrieb des Drehtellers 40 eingestellt, wobei die Motorsteuerung 50 entsprechend von der Auswerteeinheit 60, die die Inhaltsund/oder Adreßdaten aus dem Einlaufbereich 20 auswertet und die zweite konstante Drehzahl wie beschrieben berechnet, angesteuert wird. Anschließend wird das Programm verlassen.

In Figur 2 (b) ist ein zweiter Ablaufplan dargestellt. Dieser Ablaufplan entspricht dabei bis einschließlich dem vierten Programmschritt 120 dem aus Figur 2 (a) bekannten Ablaufplan. Nach dem vierten Programmpunkt 120 wird gemäß Figur 2 (b) bei einer Ja-Entscheidung zu einem sechsten Programmpunkt 130 verzweigt, andernfalls wird zum dritten Programmpunkt 115 zurückverzweigt. Beim sechsten Programmpunkt 130 führt die Auswerteeinheit 60 in der beschriebenen Weise eine Messung der konstant linearen Aufnahmegeschwindigkeit durch. Anschließend wird zu einem siebten Programmpunkt 150 verzweigt. Beim siebten Programmpunkt 150 berechnet die Auswerteeinheit 60 in gleicher Weise wie beim fünften Programmpunkt 145 die zweite konstante Drehzahl für den Abspielbetriebsmodus, wobei für die konstant lineare Aufnahmegeschwindigkeit jedoch nicht mehr der vorgegebene Wert von beispielsweise 1,2 m/s sondern der in der Auswerteeinheit 60 gemessene Wert verwendet wird, so daß die Ermittlung der zweiten konstanten Drehzahl gemäß der Realisierungsform nach Figur 2 (b) genauer ist. Nach dem siebten Programmpunkt 150 wird das Programm verlassen.

Figur 2 (c) zeigt eine dritte Realisierungsform. Diese dritte Realisierungsform entspricht dabei in ihrem Ablaufplan bis einschließlich dem zweiten Programmpunkt 110 den aus Figur 2 (a) und Figur 2 (b) bekannten Ablaufplänen. Vom zweiten Programmpunkt 110 wird gemäß Figur 2 (c) bei einer Nein-Entscheidung zum zweiten Programmpunkt 110 zurückverzweigt und bei einer Ja-Entscheidung direkt, das heißt ohne Auslesen und Auswerten der im Einlaufbereich 20 gespeicherten Inhalts- und/oder Adreßdaten zum sechsten Programmpunkt 130 verzweigt und die konstant lineare Aufnahmegeschwindigkeit wie beschrieben gemessen. Anschließend wird zu einem achten Programmpunkt 155 verzweigt. Beim achten Programmpunkt 155 wird die zweite konstante Drehzahl für den Abspielbetriebsmodus dadurch ermittelt, daß die äußerste Datenspur 15 am Außenrand 75 des Programmbereichs 30 gemäß Figur 1 angeordnet angenommen wird, wobei der Abstand dieses Außenrandes 75 von der Rotationsachse 5 aufgrund der vorgegebenen Anordnung des Einlaufbereiches 20, des Programmbereichs 30 und des Auslaufbereichs 35 auf dem plattenförmigen Speichermedium 1 in der Auswerteeinheit 60 bekannt ist. Aus der so angenommenen äußersten Datenspur 15 und der gemessenen konstanten linearen Aufnahmegeschwindigkeit wird dann in der beschriebenen Weise die zweite konstante Drehzahl für den Abspielbetriebsmodus in der Auswerteeinheit 60 ermittelt und der Motor 45 entsprechend zur Einstellung dieser Drehzahl durch die Motorsteuerung 50 angesteuert. Nach dem achten Programmpunkt 155 wird das Programm verlassen.

Gemäß Figur 2 (d) ist eine erste Realisierungsform des erfindungsgemäßen. Verfahrens dargestellt. Bis einschließlich dem zweiten Programmpunkt 110 entspricht dabei der Ablaufplan nach Figur 2 (d) den zuvor beschriebenen Ablaufplänen gemäß den Figuren 2 (a)- 2 (c). Bei einer Ja-Entscheidung verzweigt das Programm vom zweiten Programmpunkt 110 zu einem neunten Programmpunkt 125, bei einer Nein-Entscheidung verzweigt es zurück zum zweiten Programmpunkt 110. Beim neunten Programmpunkt 125 springt die Lesevorrichtung 25 auf die äußerste, von der Rotationsachse 5 abgewandte und mit Nutzdaten beschriebene Datenspur 15 des plattenförmigen Speichermediums 1, wobei sich diese äußerste Datenspur 15 im Programmbereich 30 des plattenförmigen Speichermediums 1 befindet. In der bereits beschriebenen Weise ermittelt anschließend bei einem zehnten Programmpunkt 135 die Auswerteeinheit 60 die Datenmenge in der äußersten Datenspur 15. Mittels der im zehnten Programmpunkt 135 ermittelten Datenmenge und der Datentransferrate berechnet die Auswerteeinheit 60 in der beschriebenen Weise die zweite konstante Drehzahl für den Abspielbetriebsmodus und steuert den Motor 45 über die Motorsteuerung 50 zur Einstellung dieser zweiten konstanten Drehzahl in einem anschließenden elften Programmpunkt 160 an. Anschließend wird das Programm verlassen.

Gemäß Figur 2 (e) wird ein Ablaufplan für eine zweite Realisierungsform des erfindungsgemäßen Verfahrens dargestellt. Dabei wird nach dem ersten Programmpunkt 100 zu einem zwölften Programmpunkt 105 verzweigt und eine vorgegebene konstant lineare Datenlesegeschwindigkeit zum Auslesen der Nutzdaten aus den Datenspuren des Programmbereichs 30 eingestellt. Anschließend wird zum zweiten Programmpunkt 110 verzweigt. Beim zweiten Programmpunkt 110 wird wie bekannt geprüft, ob ein Speichermedium 1 in das Abspielgerät 10 eingelegt wurde. Ist dies der Fall, so wird zum neunten Programmpunkt 125 verzweigt, andernfalls wird zum zweiten Programmpunkt 110 zurückverzweigt. Nach Spursprung der Lesevorrichtung 25 zur äußersten Datenspur 15 beim neunten Programmpunkt 125 wird zu einem dreizehnten Programmpunkt 140 verzweigt. Beim dreizehnten Programmpunkt 140 wird die zum Auslesen der äußersten Datenspur 15 durch die Lesevorrichtung 25 bei der vorgegebenen konstant linearen Datenlesegeschwindigkeit erforderliche Zeit in der Auswerteeinheit 60 ermittelt. Anschließend wird zu einem vierzehnten Programmpunkt 165 verzweigt. Beim vierzehnten Programmpunkt 165 ermittelt die Auswerteeinheit 60 aus der beim dreizehnten Programmpunkt 140 ermittelten Zeit und der vorgegebenen konstant linearen Datenlesegeschwindigkeit für das Auslesen der Daten aus der äußersten Datenspur 15, wie bereits beschrieben, die in dieser äußersten Datenspur 15 gespeicherte Datenmenge. Aus der ermittelten Datenmenge und der Datentransferrate berechnet die Auswerteeinheit 60 in der beschriebenen Weise die zweite konstante Drehzahl für den Abspielbetriebsmodus und steuert den Motor 45 über die Motorsteuerung 50 entsprechend zur Einstellung dieser Drehzahl am Drehteller 40 an. Anschließend wird das Programm verlassen.

## Patentansprüche

1. Verfahren zur Einstellung einer Drehzahl für ein rotatorisches Auslesen von auf einem plattenförmigen Speichermedium (1) mit Konstanter linearer Aufzeichnungsgeschwindigkeit abgespeicherten Nutzdaten in einem Abspielgerät (10), wobei eine äußerste, von der Rotationsachse (5) abgewandte und mit Nutzdaten beschriebene Datenspur (15) des plattenförmigen Speichermediums (1) ermittelt wird, wobei ein Wert für die in der äußersten Datenspur (15) gespeicherte Datenmenge ermittelt wird, wobei die Drehzahl in Abhängigkeit der ermittelten Datenmenge und einer Datentransferrate eingestellt wird, wobei die Datentransferrate eine maximale Datenmenge angibt, die pro Zeiteinheit vom Abspielgerät (10) auslesbar ist, so daß die in der äußersten Datenspur (15) abgespeicherten Nutzdaten mit der Datentransferrate beim Abspielen des plattenförmigen Speichermediums (1) auslesbar sind, und wobei die Drehzahl beim Abspielen des plattenförmigen Speichermediums (1) konstant gehalten wird, **dadurch gekennzeichnet, daß** der Wert für die in der äußersten Datenspur (15) gespeicherte Datenmenge durch Messung ermittelt wird.

2. Verfahren nach Anspruch 1, **dadurch gekennzeichnet, daß** die äußerste Datenspur (15) durch Auswertung von Inhaltsdaten in einem Einlaufbereich (20) des plattenförmigen Speichermediums (1) ermittelt wird.

3. Verfahren nach Anspruch 1 oder 2, **dadurch gekennzeichnet, daß** der Wert für die in der äußersten Datenspur (15) gespeicherte Datenmenge in Abhängigkeit einer Messung einer konstant linearen Aufnahmegeschwindigkeit ermittelt wird, mit der die Nutzdaten in den Datenspuren des plattenförmigen Speichermediums (1) gespeichert wurden.

4. Verfahren nach Anspruch 1, 2 oder 3, **dadurch gekennzeichnet, daß** der Wert für die in der äußersten Datenspur (15) gespeicherte Datenmenge durch Spursprung einer Lesevorrichtung (25) des Abspielgerätes (10) auf diese Datenspur (15), Auslesen der Nutzdaten aus dieser Datenspur (15) und Messen der Anzahl der ausgelesenen Nutzdaten dieser Datenspur (15) ermittelt wird.

5. Verfahren nach einem der vorherigen Ansprüche, **dadurch gekennzeichnet, daß** der Wert für die in der äußersten Datenspur (15) gespeicherte Datenmenge durch Spursprung der Lesevorrichtung (25) des Abspielgerätes (10) auf diese Datenspur (15), Auslesen der Nutzdaten aus dieser Datenspur (15) mit einer vorgegebenen konstant linearen Geschwindigkeit und Messen der Zeit für diesen Auslesevorgang ermittelt wird.

## Claims

1. Method for setting a rotation speed for rotatary reading of user data, stored on a disk-like storage medium (1) at a constant linear recording speed, in a playback unit (10), where an outermost data track (15), which is remote from the axis of rotation (5) and has user data written on it, on the disk-like storage medium (1) is ascertained, where a value for the volume of data stored in the outermost data track (15) is ascertained, where the rotation speed is set on the basis of the ascertained volume of data and a data transfer rate, where the data transfer rate specifies the maximum volume of data which can be read by the playback unit (10) per unit time, so that the user data stored in the outermost data track (15) can be read at the data transfer rate when the disk-like storage medium (1) is played back, and where the rotation speed is kept constant when playing back the disk-like storage medium (1), **characterized in that** the value for the volume of data stored in the outermost data track (15) is ascertained by measurement.

2. Method according to Claim 1, **characterized in that** the outermost data track (15) is ascertained by evaluating content data in a run-in area (20) of the disk-like storage medium (1).

3. Method according to Claim 1 or 2, **characterized in that** the value for the volume of data stored in the outermost data track (15) is ascertained on the basis of a measurement of a constantly linear recording speed at which the user data was stored in the data tracks on the disk-like storage medium (1).

4. Method according to Claim 1, 2 or 3, **characterized in that** the value for the volume of data stored in the outermost data track (15) is ascertained by virtue of a reading apparatus (25) in the playback unit (10) jumping track to this data track (15), the user data being read from this data track (15) and the number of user data items read from this data track (15) being measured.

5. Method according to one of the preceding claims, **characterized in that** the value for the volume of data stored in the outermost data track (15) is ascertained by virtue of the reading apparatus (25) in the playback unit (10) jumping track to this data track (15), the user data being read from this data track (15) at a prescribed constant linear speed and the time for this reading operation being measured.

## Revendications

1. Procédé de réglage de la vitesse de rotation pour la lecture rotative, dans un lecteur (10), d'un support de stockage (1) en forme de disque ayant une vitesse d'enregistrement linéaire constante de données utiles stockées, selon lequel une piste de données (15) du support de stockage (1) en forme de disque, extérieure située à l'opposé de l'axe de rotation (5) et remplie de données utiles est identifiée, une valeur relative à la quantité de données stockée dans la piste de données extérieure (15) est déterminée, la vitesse de rotation est réglée en fonction de la quantité de données déterminée et d'un débit de transfert des données, le débit de transfert des données correspond à une quantité de données maximale pouvant être lue par le lecteur (10) par unité de temps, de telle sorte que les données utiles stockées dans la piste de données extérieure (15) peuvent être lues au débit de transfert des données lors de la lecture du support de stockage en forme de disque (1), la vitesse de rotation étant maintenue constante lors de la lecture du support de stockage en forme de disque (1),
**caractérisé en ce que**
la valeur relative à la quantité de données stockée dans la piste de données extérieure (15) est déterminée par une mesure.

2. Procédé selon la revendication 1,
**caractérisé en ce que**
la piste de données extérieure (15) est définie par l'exploitation des données contenues dans une zone d'entrée (20) du support de stockage en forme de disque (1).

3. Procédé selon la revendication 1 ou 2,
**caractérisé en ce que**
la valeur relative à la quantité de données stockée dans la piste de données extérieure (15) est déterminée en fonction d'une mesure d'une vitesse d'enregistrement linéaire constante, à laquelle les données utiles ont été stockées dans les pistes de données du support de stockage en forme de disque (1).

4. Procédé selon la revendication 1, 2 ou 3,
**caractérisé en ce que**
la valeur relative à la quantité de données stockée dans la piste de données extérieure (15) est déterminée par un saut de piste d'un dispositif de lecture (25) du lecteur (10) sur cette piste de données (15), par la lecture des données utiles à partir de cette piste de données (15) et par la mesure du nombre de données utiles de cette piste de données (15) ayant été lues.

5. Procédé selon l'une des revendications précédentes,
**caractérisé en ce que**
la valeur relative à la quantité de données stockée dans la piste de données extérieure (15) est déterminée par un saut de piste du dispositif de lecture (25) du lecteur (10) sur cette piste de données (15), par la lecture des données utiles à partir de cette piste de données (15) à une vitesse linéaire constante prédéterminée et par la mesure du temps nécessaire à ce processus de lecture.
